# EUROPEAN PATENT SPECIFICATION

(11) **EP 0 371 296 B1**
(45) Date of publication and mention of the grant of the patent: **07.02.1996**
(21) Application number: 89120775.5
(22) Date of filing: 09.11.1989
(51) Int. Cl.: G06F 11/00, G06F 13/24

(54) **Microcomputer interface arrangement**
Mikrorechnerschnittstellenanordnung
Agencement d'interface de microcalculateur

(30) Priority: 26.11.1988 GB 8827663
(43) Date of publication of application: 06.06.1990
(73) Proprietor: MOTOROLA, INC., Schaumburg, IL 60196 (US)
(72) Inventor: Burri, Michel, CH-1218 Geneva (CH)
(74) Representative: Ibbotson, Harold

(56) References cited:
- US-A- 3 911 400
- US-A- 4 642 760

## Description

This invention relates to a microcomputer interface arrangement and particularly to an interface arrangement which enables identification of a faulty interface unit amongst a plurality of such units coupled to a microcomputer unit.

It is known to couple a plurality of interface units, such as power switching units to a microcomputer which controls the switching of the units via respective control lines.

Each such unit is usually provided with a fault indicating output which provides a fault indicating output signal in the event of a fault occurring in the unit. It is common to couple all the fault indicating output terminals together in a wired OR configuration and to the interrupt input of the microcomputer unit.

In the event of a fault occurring in one of the interface units an output signal at its fault indicating output will interrupt the microcomputer to alert it to the fault. In view of the wired OR configuration, it has hitherto not been possible to identify the unit originating the fault indicating signal without separate diagnostic procedures requiring the provision of an extra diagnostic pin and the disturbing of the output states of the units.

US-A-3 911 400 there is disclosed a drive condition detecting circuit in a data processing system having a number of drive units. Each drive unit includes a flip-flop which can be set when an error condition occurs. The flip-flop transmits a signal to interrupt the system. US-A-4 642 760 discloses a status-change gathering apparatus where status change data is supplied to a processor from a plurality of input devices. When an interrupt signal is received by the processor, a sense signal is sent to all the inout devices and the one which has generated the interrupt signal responds to the sense signal on a unique line to the processor.

According to the invention there is provided a microcomputer interface arrangement comprising:
a microcomputer unit having a plurality of input/output (I/O) terminals and an interrupt indicating input terminal;
a plurality of interface units each having:
an input terminal coupled by a two way control line to a respective I/O terminal of the microcomputer unit;
an output terminal; and
output means coupled between the input and output terminals;
   wherein each of the plurality of interface units further includes:
a fault indicating terminal, the fault indicating terminals of the plurality of interface units being coupled together and to the interrupt indicating terminal of the microcomputer; and the arrangement further comprises:
fault indicating means responsive to a fault condition at the output terminal of at least one of the interface units for providing a fault indicating signal at the fault indicating terminal to interrupt the microcomputer unit and inverting, via the interrupt indicating terminal coupled together with the fault indicating terminals, the state of the input terminal of said at least one of the interface units without affecting the output state, whereby the interface unit having a fault condition may be identified.

The fault indicating means preferably includes diagnostic means for providing an output signal in response to a fault condition at the output terminal.

The fault indicating means may further include a controllable switch having an input coupled to the output of the diagnostic means and an output coupled to the fault indicating terminal to provide the fault indicating signal.

The controllable switch may have an output for providing an output voltage in response to the output signal of the diagnostic means and the means responsive to the fault indicating signal may include a comparator for comparing the output voltage with a reference voltage.

Typically the reference voltage is greater than the said output voltage of the controllable switch and current injection means is provided operable on interruption of the microcomputer unit for injecting current into the controllable switch to increase its output voltage above the level of the reference voltage whereby an output signal is provided at the output of the comparator.

Preferably the output means includes latch means coupled between the input terminal and the output terminal.

Typically a second controllable switch is coupled between the input terminal and the latch means, the latch means having an input coupled to one selectable terminal of the switch and an inverter is coupled between the output of the latch means and a second selectable terminal and the output of the comparator is coupled to a control input of the second controllable switch to select the second terminal of the switch in response to an output signal provided by the comparator, whereby when the second terminal is selected the input terminal is coupled thereto to invert the said input state.

An exemplary embodiment of the invention will now be described with reference to the accompanying drawings in which
Figure 1 is a block schematic of a microcomputer interface arrangement in accordance with the invention; and
Figure 2 is a more detailed block diagram of an interface unit of Figure 1.

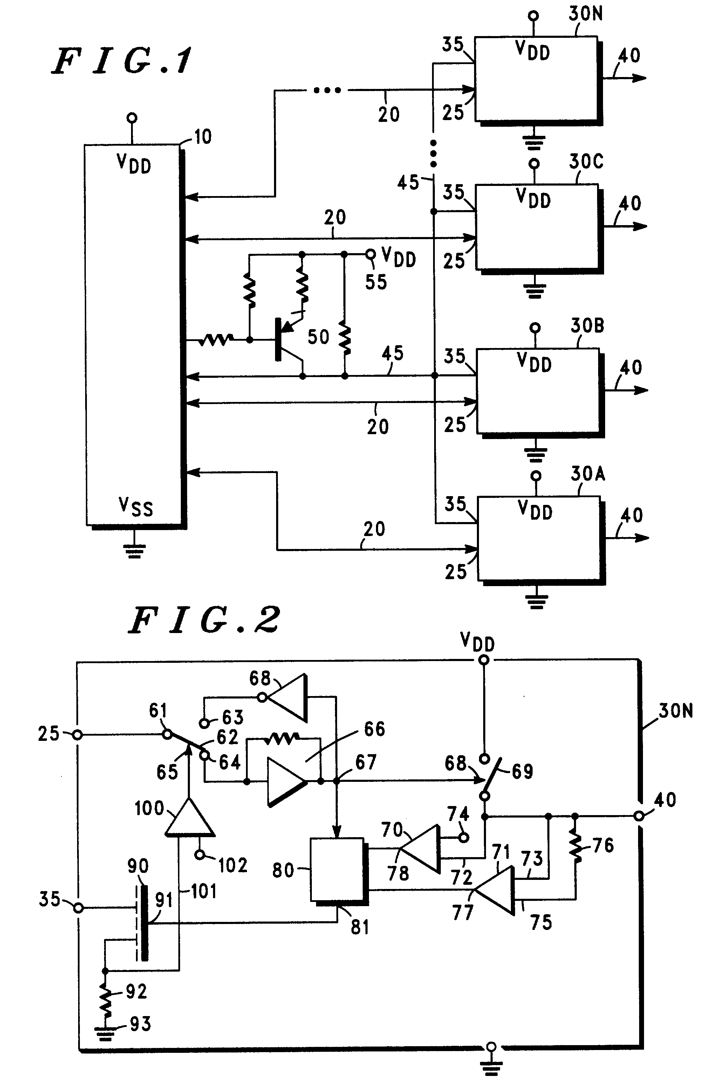

Referring to Figure 1 a microcomputer unit (MCU) 10 has a plurality of I/O terminals P1, P2, P3 through Pn and an interrupt indicating terminal PINT which may be a unique interrupt terminal or an I/O pin used as an interrupt terminal.

The I/O terminals P1, P2, P3, Pn are coupled by means of respective two way control lines 20 to input terminals 25 of respective interface units 30a, 30b, 30c .....30n.

Each interface unit 30a through 30n also has a fault indicating terminal 35 and an output terminal 40. All the fault indicating terminals 35 are coupled together in wired OR configuration and to the interrupt terminal PINT of the MCU 10, by means of a fault line 45.

Each interface unit provides an appropriate output state (depending on its function) in response to a data input signal fed to its input terminal 25 from the respective I/O terminal of the MCU 10.

A PNP transistor 50 has its base electrode coupled to a terminal P5 of the MCU 10 and its emitter and collectors coupled respectively to a supply line 55 and to the fault line 45.

In the event of a fault occurring within one of the interface units 30a through 30n a fault indicating signal will appear at the fault indicating output 35 of the faulty unit and will be fed via the fault line 45 to the interrupt input PINT, where it will interrupt the MCU 10.

On being interrupted the MCU initiates a diagnostic procedure to determine which of the interface units is faulty. A signal is applied to the base of the PNP transistor 50 from the terminal P5 of the MCU 10 to turn on the transistor 50. Current is injected by the transistor 50 onto the fault line 45 and into the fault indicating terminal 35 of each interface unit 30.

In response to the current injected onto the fault line 45, the logical value of the data state of the faulty interface unit previously set by the MCU 10 is caused to be inverted whilst the non-faulty units have their data states latched to their originally set values.

With the I/O terminals P1 through Pn set to input mode by the MCU 10, the MCU reads the data values presented at the terminals 25 of the interface units 30 and determines the faulty unit by virtue of its inverted data value. The faulty unit is thus identified without changing the output data values of the interface units.

Referring now to Figure 2 there is shown a block schematic of an exemplary interface unit of Figure 1. In this example the interface unit is a controlled high-side switch for coupling a supply voltage VDD applied to the VDD supply terminal, to the output terminal 40, in response to a digital value applied to the input terminal 25 by the MCU 10.

The input terminal 25 is coupled to the input 61 of a controllable switch 62, which has selectable terminals 63 and 64, selectable in response to a control signal applied to a control input 65.

The switch 62 normally has its input 61 coupled to the terminal 64 to which is also coupled latch 66.

The latch 66 has an output 67 which is coupled via an inverter 68 to the second selectable terminal 63 of the switch 62.

The output 67 of the latch 66 is coupled to the control input 68 of a power switch 69 coupled between the VDD supply terminal and the output terminal 40.

On application by the MCU 10 of an appropriate digital value to the input terminal 25 this value is held at the output of the latch and closes the controllable switch to couple the supply voltage VDD to the output terminal 40 for application to a load.

The output terminal 40 is coupled to a respective input 72, 73 of each of two comparators 70, 71. The comparator 70 is a voltage sensing comparator whose second input 74 receives a reference voltage and provides an output signal in the event of the output voltage falling too low; such a situation might occur if the load resistance becomes too low but is not zero.

The comparator 71 is a current sensing comparator and its second input 75 is coupled to the output terminal 40 via a resistor 76. The comparator 71 senses the voltage drop across the resistor and provides an output signal if the drop becomes too large indicating too high a current flow due to, for example, a short circuit load.

The comparators 70 and 71 have outputs 78 and 77, which are coupled to a diagnostic circuit 80 which is also coupled to the output 67 of the latch. The logic state of the latch output 67 indicates to the diagnostic circuit 80 the intended output state and this intended state is compared with the output states of the comparators 70 and 71 to determine if a fault condition exists.

The diagnostic circuit 80 has an output 81 coupled to the gate control electrode 91 of a MOS transistor 90, the drain of which is coupled to the fault indicating terminal 35, whilst its source is coupled via a resistor 92 to ground reference terminal 93.

The source terminal of the transistor 90 is coupled to one input 101 of a comparator 100 whose other input 102 receives a reference voltage. The comparator 100 has its output 103 coupled to the control input 65 of the controllable switch 62.

In the event of a fault being detected by the diagnostic circuit 80, an output signal is provided at its output 81 and is applied to the gate 91 of the transistor 90 to turn ON the transistor. Current flows in the transistor 90 and a fault indicating voltage is developed at the fault indicating terminal 35. The fault indicating voltage is applied to the interrupt terminal PINT of the MCU 10.

Current flowing through the transistor 90 also develops a voltage across the resistor 92, which voltage appears at the input terminal 101 of the comparator 100. The value of the reference voltage applied to the reference input terminal 102 of the comparator 100 is chosen to be greater than that developed on the resistor 92 so that, at this stage, the comparator provides no output signal. This is to ensure continued normal operation until the MCU 10 initiates a diagnostic test.

As explained above, on initiation of the diagnostic test the I/O terminals of the MCU 10 are switched to input to read the logic state at the input terminals 25 of the interface units 30 and current is injected by the transistor 50 into the fault indicating terminals 35 of each interface unit.

The injected current increases the current flow through the transistor 90 and accordingly the voltage drop across the resistor 92 for the faulty interface unit. The voltage applied to the input 101 of the comparator 100 increases and now exceeds the reference voltage applied to the input terminal 102.

The comparator 100 provides an output signal which switches the controllable switch to couple the input terminal 25 to the selectable terminal 63. At this terminal 63 will appear the inverted logic state to that originally applied to the input terminal 25 and now appearing at the output 67 of the latch 66, due to the connection of the inverter 68. Thus the input terminal 25 will also indicate the inverse logic state to that set by the MCU 10 and latched at the output 67 of the latch 66.

In all other interface units where no fault is detected, the respective transistor 90 will not be turned ON and the controllable switches 62 will maintain the coupling of the input terminals 25 to the non-inverted outputs 67 of the latches 66 and the MCU will accordingly read the originally set logic states.

Thus the interface arrangement of the invention allows the detection not only of a fault condition, but also the identification of a faulty interface unit without losing or otherwise changing the output states of the correctly operating units.

After completion of the diagnostic test the transistor 50 is turned off and the I/O terminals P1 through Pn are once more set in output with their original data values restored. The removal of the current injected into the transistor 90 will result in the removal of the output signal of the comparator 100 and the switch 62 will revert to its original condition in which the input terminal 25 is coupled to the input of the latch 66.

The embodiment described is by way of example only and modifications may be made without departing from the scope of the invention as defined by the appended claims. For example although described with reference to a high side switch interface, the invention is applicable to any kind of interface in which the output logic state is controlled in dependence upon an input logic state supplied by a microcomputer output. Also the particular fault conditions detected are exemplary and other or additional fault detecting means may be employed, such as open circuit load detection and thermal limit detection.

## Claims

1. A microcomputer interface arrangement comprising:
a microcomputer unit (10) having a plurality of input/output (I/O) terminals (P1, P2, P3 ... Pn) and an interrupt indicating input terminal (PINT);
a plurality of interface units (30a, 30b, 30c, ... 30n) each having:
an input terminal (25) coupled by a two way control line (20) to a respective I/O terminal (P1, P2, P3 ... Pn) of the microcomputer unit (10);
an output terminal (40); and
output means (61-69) coupled between the input (25) and output terminals (40);
characterised in that each of the plurality of interface units further includes:
a fault indicating terminal (35), the fault indicating terminals (35) of the plurality of interface units (30a, 30b, 30c, ... 30n) being coupled together and to the interrupt indicating terminal (PINT) of the microcomputer (10); and in that the arrangement further comprises:
fault indicating means (80, 90, 100) responsive to a fault condition at the output terminal (40) of at least one of the interface units (30a, 30b, 30c, ... 30n) for providing a fault indicating signal at the fault indicating terminal (35) to interrupt the microcomputer unit (10) and inverting, via the interrupt indicating terminal (PINT) coupled together with the fault indicating terminals (35), the state of the input terminal (25) of said at least one of the interface units (30a, 30b, 30c, ... 30n) without affecting the output state, whereby the interface unit (30a, 30b, 30c, ... 30n) having a fault condition may be identified.

2. The arrangement of claim 1 wherein the fault indicating means (80, 90, 50) includes diagnostic means (80) for providing an output signal in response to a fault condition at the output terminal (40).

3. The arrangement of claim 2 wherein the fault indicating means (80, 90, 50) further comprises a controllable switch (90) having an input coupled to the output of the diagnostic means (80) and an output coupled to the fault indicating terminal (35) to provide the fault indicating signal.

4. The arrangement of claim 3 wherein the controllable switch (90) has an output for providing an output voltage in response to the output signal of the diagnostic means (80).

5. The arrangement of claim 4 wherein the means (80, 90, 100) responsive to the fault indicating signal include a comparator (100) for comparing the output voltage of the controllable switch (90) with a reference voltage.

6. The arrangement of claim 5 wherein the reference voltage is greater than the said output voltage of the controllable switch (90) and current injection means (50) is provided operable on interruption of the microcomputer unit (10) for injecting current into the controllable switch (90) to increase its output voltage above the level of the reference voltage whereby an output signal is provided at the output of the comparator (100).

7. The arrangement of any preceding claim wherein the output means (61-69) includes latch means (66) coupled between the input terminal (25) and the output terminal (40).

8. The arrangement of claim 7 wherein a second controllable switch (61) is coupled between the input terminal (25) and the latch means (66), the latch means (66) has an input coupled to one selectable terminal (64) of the switch (61), and an inverter (68) is coupled between the output of the latch means (66) and a second selectable terminal (63) and the output of the comparator is coupled to a control input (65) of the second controllable switch (61) to select the second terminal (63) of the switch (61) in response to an output signal provided by the comparator (100), whereby when the second terminal (63) is selected the input terminal (25) is coupled thereto to invert the said input state.

## Patentansprüche

1. Mikrocomputer-Schnittstellenanordnung, welche umfaßt:
eine Mikrocomputer-Einheit (10) mit einer Vielzahl von Eingabe/Ausgabe-(I/O-)Klemmen (P1,P2,P3 ... Pn) und einer Interruptanzeige-Eingangsklemme (PINT);
eine Vielzahl von Schnittstellen-Einheiten (30a,30b,30c ... 30n), jeweils mit:
einer über eine 2Wege-Steuerleitung (20) mit einer jeweiligen I/O-Eingangsklemme (P1,P2,P3 ... Pn) einer Mikrocomputer-Einheit (10) gekoppelten Eingangsklemme (25);
einer Ausgangsklemme (40); und
zwischen der Eingangs- (25) und der Ausgangsklemme (40) angeschlossene Ausgabemittel (61-69);
**dadurch gekennzeichnet**, daß jede der Vielzahl von Schnittstellen-Einheiten weiter enthält:
eine Fehler-Anzeigeklemme (35), wobei die Fehler-Anzeigeklemmen (35) der Vielzahl von Schnittstellen-Einheiten (30a,30b,30c ... 30n) miteinander und mit der Interruptanzeige-Eingangsklemme (PINT) des Mikrocomputers gekoppelt sind;
und daß die Anordnung weiter umfaßt:
auf einen Fehlerzustand an der Ausgangsklemme (40) mindestens einer Schnittstellen-Einheit (30a,30b,30c ... 30n) reagierende Fehler-Anzeigemittel (80,90,100) zum Schaffen eines Fehler-Anzeigesignals an der Fehler-Anzeigeklemme (35) um einen Interrupt der Mikrocomputer-Einheit (10) herbeizuführen und um über die mit den Fehler-Anzeigeklemmen (35) gekoppelte Interruptanzeigeklemme (PINT) den Zustand der Eingangsklemme der mindestens einen Schnittstellen-Einheit (30a,30b,30c ... 30n) ohne Beeinflussung des Ausgangszustandes zu invertieren, wodurch die mit einem Fehlerzustand behaftete Schnittstellen-Einheit (30a,30b,30c ... 30n) identifiziert werden kann.

2. Anordnung nach Anspruch 1, bei der die Fehler-Anzeigemittel (80,90,50) Diagnosemittel (80) zum Schaffen eines Ausgangssignals in Reaktion auf einen Fehlerzustand an der Ausgangsklemme (40) enthalten.

3. Anordnung nach Anspruch 2, bei der die Fehler-Anzeigemittel (80,90,50) weiter einen steuerbaren Schalter (90) umfassen, der einen mit dem Ausgang des Diagnosemittels gekoppelten Eingang und einen zum Schaffen des Fehler-Anzeigesignals mit der Fehler-Anzeigeklemme (35) gekoppelten Ausgang umfaßt.

4. Anordnung nach Anspruch 3, bei der der steuerbare Schalter einen Ausgang zum Schaffen einer Ausgangsspannung in Reaktion auf das Ausgangssignal des Diagnosemittels (80) besitzt.

5. Anordnung nach Anspruch 4, bei der die auf das Fehler-Anzeigesignal reagierenden Mittel (80,90,100) einen Komparator (100) zum Vergleichen der Ausgangsspannung des steuerbaren Schalters (90) mit einer Referenzspannung enthalten.

6. Anordnung nach Anspruch 5, bei der die Referenzspannung größer als die Ausgangsspannung des steuerbaren Schalters (90) ist und Strom-Injektionsmittel (50) vorgesehen ist, das auf einen Interrupt der Mikrocomputer-Einheit (10) hin betreibbar ist, Strom in den steuerbaren Schalter (90) zu injizieren, um dessen Ausgangsspannung über den Pegel der Referenzspannung zu erhöhen, wodurch ein Ausgangssignal am Ausgang des Komparators (100) geschaffen wird.

7. Anordnung nach einem der vorangehenden Ansprüche, bei der das Ausgabemittel (61-69) zwischen der Eingabeklemme (25) und der Ausgabeklemme (40) angeschlossenes Signalspeichermittel (66) enthält.

8. Anordnung nach Anspruch 7, bei der ein zweiter steuerbarer Schalter (61) zwischen der Eingangsklemme (25) und dem Signalspeichermittel (66) angeschlossen ist, das Signalspeichermittel (66) einen mit einer wählbaren Klemme (64) des Schalters (61) gekoppelten Eingang besitzt, ein Inverter (68) zwischen dem Ausgang des Signalspeichermittels (66) und einer zweiten wählbaren Klemme (63) angeschlossen ist, und der Ausgang des Komparators mit einem Steuereingang (65) des zweiten steuerbaren Schalters (61) gekoppelt ist, um die zweite Klemme (63) des Schalters anzuwählen in Reaktion auf ein durch den Komparator (100) geschaffenes Ausgangssignal, wodurch, wenn die zweite Klemme (63) gewählt ist, die Eingangsklemme (25) damit gekoppelt wird, um den Eingangszustand zu invertieren.

## Revendications

1. Un agencement d'interface de micro-ordinateur comprenant :
un unité (10) de micro-ordinateur ayant une pluralité de bornes (P1, P2, P3 ... Pn) d'entrée/de sortie et une borne (PINT) d'entrée d'indication d'interruption ;
une pluralité d'unités d'interface (30a, 30b, 30c, ... 30n) ayant chacune :
une borne (25) d'entrée couplée, par une ligne (20) de commande à deux parcours, à une borne (P1, P2, P3 ... Pn) d'entrée/de sortie respective de l'unité (10) de micro-ordinateur ;
une borne (40) de sortie ; et
des moyens (61 à 69) de sortie couplés entre les bornes (25) d'entrée et les bornes (40) de sortie ;
caractérisé en ce que chaque unité d'interface de la pluralité d'unités d'interface inclut de plus :
une borne (35) d'indication de défaut, les bornes (35) d'indication de défaut de la pluralité d'unités d'interface (30a, 30b, 30c, ... 30n) étant couplées ensemble et à la borne (PINT) d'indication d'interruption du micro-ordinateur (10) ;
et en ce que l'agencement comprend de plus :
des moyens (80, 90, 100) d'indication de défaut réagissant une condition de défaut à la borne (40) de sortie d'au moins une des unités d'interface (30a, 30b, 30c, ... 30n), pour procurer un signal d'indication de défaut à la borne (35) d'indication de défaut, afin d'interrompre l'unité (10) de micro-ordinateur et d'inverser, par l'intermédiaire de la borne (PINT) d'indication d'interruption, couplée ensemble avec les bornes (35) d'indication de défaut, la condition de la borne (25) d'entrée d'au moins ladite unité précité des unités d'interface (30a, 30b, 30c, ... 30n), sans affecter la condition de sortie, grâce à quoi, l'unité d'interface (30a, 30b, 30c, ... 30n) ayant une condition de défaut peut être identifiée.

2. L'agencement de la revendication 1, dans lequel les moyens (80, 90, 50) d'indication de défaut incluent des moyens (80) de diagnostic, pour procurer un signal de sortie, en réponse à une condition de défaut, à la borne (40) de sortie.

3. L'agencement de la revendication 2, dans lequel les moyens (80, 90, 50) d'indication de défaut comprennent de plus un interrupteur (90) susceptible d'être commandé, ayant une entrée couplée à la sortie des moyens (80) de diagnostic et une sortie couplée à la borne (35) d'indication de défaut, afin de procurer le signal d'indication de défaut.

4. L'agencement de la revendication 3, dans lequel l'interrupteur (90) susceptible d'être commandé a une sortie pour procurer une tension de sortie en réponse au signal de sortie des moyens (80) de diagnostic.

5. L'agencement de la revendication 4, dans lequel les moyens (80, 90, 100) réagissant au signal d'indication de défaut incluent un comparateur (100), pour comparer la tension de sortie de l'interrupteur (90) susceptible d'être commandé avec une tension de référence.

6. L'agencement de la revendication 5, dans lequel la tension de référence est plus grande que ladite tension de sortie de l'interrupteur (90) susceptible d'être commandé et des moyens (50) d'injection de courant sont procurés, susceptibles d'être exploités lors d'interruption de l'unité (10) de micro-ordinateur, pour injecter du courant dans l'interrupteur (90) susceptible d'être commandé afin d'augmenter sa tension de sortie au-dessus du niveau de la tension de référence, grâce à quoi, un signal de sortie est procuré à la sortie du comparateur (100).

7. L'agencement d'une quelconque précédente revendication, dans lequel les moyens (61 à 69) de sortie incluent des moyens (66) de verrouillage, couplés entre la borne (25) d'entrée et la borne (40) de sortie.

8. L'agencement de la revendication 7, dans lequel : un second interrupteur (61) susceptible d'être commandé est couplé entre la borne (25) d'entrée et les moyens (66) de verrouillage, les moyens (66) de verrouillage ont une entrée couplée à une borne (64) susceptible d'être sélectionnée de l'interrupteur (61), un inverseur (68) est couplé entre la sortie des moyens (66) de verrouillage et une seconde borne (63) susceptible d'être sélectionnée, et la sortie du comparateur est couplée à une entrée (65) de commande du second interrupteur (61) susceptible d'être commandé, afin de sélectionner la seconde borne (63) de l'interrupteur (61) en réponse à un signal de sortie procuré par le comparateur (100), grâce à quoi, lorsque la seconde borne (63) est sélectionnée, la borne (25) d'entrée est couplée à celle-ci afin d'inverser ladite condition d'entrée.
